# EUROPEAN PATENT APPLICATION

(11) **EP 4 517 694 A1**
(43) Date of publication of application: **05.03.2025**
(21) Application number: 23819073.0
(22) Date of filing: 05.06.2023
(51) Int. Cl.: G06V 20/40

(54) **IMAGE DESCRIPTION METHOD, ELECTRONIC DEVICE AND COMPUTER-READABLE STORAGE MEDIUM**

(30) Priority: 08.06.2022 CN 202210644825
(71) Applicant: Huawei Technologies Co., Ltd., Shenzhen, Guangdong 518129 (CN)
(72) Inventor: WU, Jihao, Shenzhen, Guangdong 518129 (CN); WANG, Ning, Shenzhen, Guangdong 518129 (CN)
(74) Representative: Isarpatent
(86) International application number: PCT/CN2023/098369
(87) International publication number: WO 2023/236908

(57) **Abstract**

This application is applicable to the field of terminal technologies, and in particular, relates to an image captioning method, an electronic device, and a computer-readable storage medium. In the method, when image captioning needs to be performed, the electronic device may determine a first prompt corresponding to an image, that is, determine a captioning scenario corresponding to the image, so that first captioning text corresponding to the image can be accurately generated based on the first prompt. In this way, captioning text with high accuracy can be generated for all images in different scenarios, accuracy of image captioning is improved, and user experience is improved.

## Description

This application claims priority to Chinese Patent Application No. 202210644825.1, filed with the China National Intellectual Property Administration on June 8, 2022 and entitled "IMAGE CAPTIONING METHOD, ELECTRONIC DEVICE, AND COMPUTER-READABLE STORAGE MEDIUM", which is incorporated herein by reference in its entirety.

### TECHNICAL FIELD

This application pertains to the field of terminal technologies, and in particular, relates to an image captioning method, an electronic device, and a computer-readable storage medium.

### BACKGROUND

Image captioning refers to generating caption information related to a given image, and is a complex task in computer vision and natural language processing. The image captioning may be applied to a scenario of guiding a blind person, to help a blind user understand screen content of an electronic device or understand an ambient environment or the like through the electronic device. The image captioning may also be applied to an information retrieval scenario and the like. Therefore, how to perform accurate image captioning for images in different scenarios is an urgent problem to be currently resolved.

### SUMMARY

Embodiments of this application provide an image captioning method, an electronic device, and a computer-readable storage medium, to perform accurate image captioning for images in different scenarios.

According to a first aspect, an embodiment of this application provides an image captioning method, applied to an electronic device, where the method may include:
obtaining a to-be-captioned image;
determining a first prompt corresponding to the image, where the first prompt indicates a captioning scenario corresponding to the image; and
generating, based on the first prompt, first captioning text corresponding to the image, where the first captioning text corresponds to the captioning scenario corresponding to the image.

In the foregoing image captioning method, when image captioning needs to be performed, the electronic device may determine the first prompt corresponding to the image, that is, determine the captioning scenario corresponding to the image, so that the first captioning text corresponding to the image can be accurately generated based on the first prompt. In this way, captioning text with high accuracy can be generated for all images in different scenarios. As a result, accuracy of image captioning is improved, and user experience is improved.

It should be understood that the captioning scenario corresponding to the image may be one of an ordinary image scenario, a text image scenario, a key object scenario, and a card/license image scenario. The text image scenario is a scenario in which the to-be-captioned image includes text. The key object scenario is a scenario in which the to-be-captioned image includes a key object. The card/license image scenario is a scenario in which the to-be-captioned image includes various cards such as a bank card or a member card or various licenses such as an identity card or a driving license. The ordinary image scenario is a scenario in which the to-be-captioned image is a pure image (namely, an image that does not include the text, the key object, or the card and the license). The key object may be any object to which a user pays attention, for example, may be any object such as a bus stop sign, a table, and a chair, or may be any obstacle on a way the user is traveling.

In a possible implementation, the determining a first prompt corresponding to the image may include:
performing scenario detection on the image to determine the captioning scenario corresponding to the image; and
determining, based on the captioning scenario corresponding to the image, the first prompt corresponding to the image.

In the image captioning method provided in this implementation, a preset correspondence between the captioning scenario and the prompt may be preset. The preset correspondence between the captioning scenario and the prompt may be set in the electronic device, or may be set in a third-party device that is communicatively connected to the electronic device, for example, may be set in a cloud server. Therefore, during image captioning, the electronic device may perform scenario analysis on the image and determine the captioning scenario corresponding to the image, to determine, based on the captioning scenario corresponding to the image and the preset correspondence, the first prompt corresponding to the image.

In an example, in the electronic device, the prompt corresponding to the text image scenario may be set to "the image includes the text", the prompt corresponding to the key object scenario is set to "the image includes the key object", the prompt corresponding to the card/license image scenario is set to "the image includes the card", the prompt corresponding to the ordinary image scenario is set to "the ordinary image includes", and the like. Therefore, when the electronic device performs scenario analysis on the image and determines that the captioning scenario corresponding to the image is the ordinary image scenario, the electronic device may determine that the first prompt corresponding to the image is "an ordinary image includes". When the electronic device performs scenario analysis on the image and determines that the captioning scenario corresponding to the image is the text image scenario, the electronic device may determine that the first prompt corresponding to the image is "the image includes the text". When the electronic device performs scenario analysis on the image and determines that the captioning scenario corresponding to the image is the key object scenario, the electronic device may determine that the first prompt corresponding to the image is "the image includes the key object". When the electronic device performs scenario analysis on the image and determines that the captioning scenario corresponding to the image is the card/license image scenario, the electronic device may determine that the first prompt corresponding to the image is "the image includes the card or the license", and the like.

Optionally, the electronic device may determine, through text detection, whether the image includes text, to determine whether the captioning scenario corresponding to the image is the text image scenario. Optionally, the electronic device may determine, through target detection, whether the image includes a key object, to determine whether the captioning scenario corresponding to the image is the key object scenario. Similarly, the electronic device may determine, through target detection, whether the image includes a card or a license, to determine whether the captioning scenario corresponding to the image is the card/license image scenario. Optionally, when the electronic device determines that the captioning scenario corresponding to the image is none of the text image scenario, the key object scenario, or the card/license image scenario, the electronic device may determine that the captioning scenario corresponding to the image is the ordinary image scenario.

For example, the performing scenario detection on the image to determine the captioning scenario corresponding to the image may include:
performing scenario detection on the image to determine a candidate scenario corresponding to the image;
when there are a plurality of candidate scenarios, obtaining a priority corresponding to each of the candidate scenarios; and
determining, based on the priority corresponding to each of the candidate scenarios, the captioning scenario corresponding to the image, where the captioning scenario corresponding to the image is one of the candidate scenarios.

In the image captioning method provided in this implementation, a priority corresponding to each captioning scenario may be preset. The priority corresponding to each captioning scenario may be set in the electronic device, or may be set in the third-party device that is communicatively connected to the electronic device, for example, may be set in the cloud server. When performing scenario detection on the image and determining that there are two or more captioning scenarios (which may be referred to as candidate scenarios for ease of distinguishing) corresponding to the image, the electronic device may accurately determine, based on the priority corresponding to each of the candidate scenario, a captioning scenario currently corresponding to the image. It should be understood that the priority corresponding to each captioning scenario may be set by the electronic device by default, or may be customized by the user.

Optionally, the electronic device may determine, based on a proportion of the text in the image, a proportion of the key object in the image, and a proportion of the card or the license in the image, the priority corresponding to each captioning scenario. Optionally, a larger proportion indicates that the electronic device may determine a higher priority of the captioning scenario corresponding to the proportion. A smaller proportion indicates that the electronic device may determine a lower priority of the captioning scenario corresponding to the proportion.

Optionally, the user may customize, based on content in which the user is interested, the priority corresponding to each captioning scenario, so that the electronic device can accurately describe, during image captioning, content in which the user is more interested. Therefore, user experience is improved. For example, when the user is more interested in the text than the key object, and is more interested in the key object than the card or the license, the user may customize a priority corresponding to the text image scenario to be higher than a priority corresponding to the key object scenario, and the priority corresponding to the key object scenario to be higher than a priority corresponding to the card/license image scenario.

In another possible implementation, the determining a first prompt corresponding to the image may include:
determining, based on a prompt generation model, the first prompt corresponding to the image.

In the image captioning method provided in this implementation, the electronic device may directly input the image to the prompt generation model for processing, to obtain a first prompt output by the prompt generation model, that is, may directly determine, based on the image, the first prompt corresponding to image. The prompt generation model may be obtained through training with training samples. Each training sample may include a training image and a prompt corresponding to the training image.

In a possible implementation, after the generating, based on the first prompt, first captioning text corresponding to the image, the method may further include:
determining accuracy corresponding to the first captioning text;
when the accuracy is less than preset accuracy, determining a second prompt corresponding to the image, where the second prompt is different from the first prompt; and
generating, based on the second prompt, second captioning text corresponding to the image.

In the image captioning method provided in this implementation, the electronic device may determine, based on the accuracy corresponding to the first captioning text, whether to determine the first captioning text as captioning text currently corresponding to the image, to ensure accuracy of captioning text corresponding to the image. In other words, when the accuracy corresponding to the first captioning text is greater than or equal to the preset accuracy, the electronic device may determine that the currently generated first captioning text is accurate. Therefore, the electronic device may determine the first captioning text as the captioning text currently corresponding to the image. When the accuracy corresponding to the first captioning text is less than the preset accuracy, the electronic device may determine that the currently generated first captioning text is wrong, and re-determine the second prompt corresponding to the image, to regenerate the second captioning text based on the second prompt. The second prompt is different from the first prompt. For example, when the first prompt is the prompt corresponding to the text image scenario, the second prompt may be the prompt corresponding to the ordinary image scenario, may be the prompt corresponding to the key object scenario, or may be the prompt corresponding to the card/license image scenario.

Optionally, after obtaining the second captioning text, the electronic device may determine accuracy corresponding to the second captioning text, and may determine, based on the accuracy corresponding to the second captioning text, whether to determine the second captioning text as the captioning text currently corresponding to the image. In other words, when the accuracy corresponding to the second captioning text is greater than or equal to the preset accuracy, the electronic device may determine the second captioning text as the captioning text currently corresponding to the image. When the accuracy corresponding to the second captioning text is less than the preset accuracy, the electronic device may re-determine a third prompt corresponding to the image, and may regenerate third captioning text based on the third prompt. The third prompt is different from the first prompt and the second prompt. After obtaining the third captioning text, the electronic device may determine accuracy corresponding to the third captioning text, and may determine, based on the accuracy corresponding to the third captioning text, whether to determine the third captioning text as the captioning text currently corresponding to the image. The rest may be deduced by analogy until the electronic device obtains corresponding N^{th} captioning text based on an N^{th} prompt, where N≥1.

Optionally, after obtaining the N^{th} captioning text, the electronic device may determine accuracy corresponding to the N^{th} captioning text. When the accuracy corresponding to the N^{th} captioning text is greater than or equal to the preset accuracy, the electronic device may determine the N^{th} captioning text as the captioning text currently corresponding to the image. When the accuracy corresponding to the N^{th} captioning text is less than the preset accuracy, the electronic device may directly regenerate captioning text (referred to as target captioning text below) based on the prompt corresponding to the ordinary image scenario, and may determine the target captioning text as the captioning text currently corresponding to the image, to provide a brief caption for the image. In this way, a possibility that image captioning is wrong is reduced, and user experience is improved.

Optionally, the electronic device may obtain a text feature corresponding to captioning text (for example, the first captioning text, the second captioning text, ..., or the N^{th} captioning text), and may determine a similarity between the text feature corresponding to the captioning text and an image feature corresponding to the image. Then, the electronic device may determine the similarity as accuracy corresponding to the captioning text. The similarity between the text feature and the image feature may be represented by a distance (for example, a cosine (cos) distance) between the text feature and the image feature or a dot product of the text feature and the image feature.

For example, the determining accuracy corresponding to the first captioning text may include:
when the captioning scenario corresponding to the image is not the ordinary image scenario, determining the accuracy corresponding to the first captioning text.

For example, the second prompt is a prompt corresponding to the ordinary image scenario.

In the image captioning method provided in this implementation, because the ordinary image scenario is a simplest captioning scenario, a possibility of wrong captioning is low. Therefore, when the captioning scenario corresponding to the image is the ordinary image scenario, the electronic device may directly determine, as the captioning text currently corresponding to the image, the first captioning text generated based on the first prompt (namely, the prompt corresponding to the ordinary image scenario). When the captioning scenario corresponding to the image is not the ordinary image scenario, after generating the first captioning text, the electronic device may determine, based on the accuracy corresponding to the first captioning text, whether the first captioning text is accurate, to determine whether to determine the first captioning text as the captioning text currently corresponding to the image. When the first captioning text is inaccurate, the electronic device may directly regenerate the second captioning text based on the prompt corresponding to the ordinary image scenario, and may determine, as the captioning text currently corresponding to the image, the second captioning text that is generated based on the prompt corresponding to the ordinary image scenario, to provide a brief caption for the image. In this way, a possibility that image captioning is wrong is reduced, and user experience is improved.

In another possible implementation, after the generating, based on the first prompt, first captioning text corresponding to the image, the method may further include:
obtaining query information input by a user; and
based on the image, determining answer content corresponding to the query information, and outputting the answer content to the user.

In the image captioning method provided in this implementation, after generating the first captioning text corresponding to the image, the electronic device may further obtain the query information of the user, and may determine the answer content corresponding to the query information, that is, may provide a further caption for the image based on the query information of the user, to caption a detail to which the user pays attention. As a result, image captioning better meets an expectation and a requirement of the user, and user experience is improved.

In a possible implementation, the generating, based on the first prompt, first captioning text corresponding to the image may include:
inputting the first prompt and the image to an image captioning model for processing, to obtain first captioning text that corresponds to the image and that is output by the image captioning model, where
the image captioning model includes an image feature extraction module and a text output module, the text output module uses a deep bidirectional encoding bert model including a cross-attention layer, the image feature extraction module is configured to: obtain an image feature corresponding to the image, and input, to the text output module, the image feature used as a sequence of the cross-attention layer, and the text output module determines, based on the sequence of the cross-attention layer and a text feature corresponding to the first prompt, the first captioning text corresponding to the image.

For example, the image captioning model is obtained through pre-training and fine-tuning of an image captioning task; and
during fine-tuning of the image captioning model, the image captioning model is trained by using training images in different captioning scenarios and training captioning text corresponding to each of the training images, and the training captioning text corresponding to each of the training images includes a prompt corresponding to each of the training images.

According to a second aspect, an embodiment of this application provides an image captioning apparatus, used in an electronic device, where the apparatus may include:
an image obtaining module, configured to obtain a to-be-captioned image;
a first prompt determining module, configured to determine a first prompt corresponding to the image, where the first prompt indicates a captioning scenario corresponding to the image; and
a first captioning text generation module, configured to generate, based on the first prompt, first captioning text corresponding to the image, where the first captioning text corresponds to the captioning scenario corresponding to the image.

In a possible implementation, the first prompt determining module may include:
a scenario detecting unit, configured to perform scenario detection on the image to determine the captioning scenario corresponding to the image; and
a first determining unit, configured to determine, based on the captioning scenario corresponding to the image, the first prompt corresponding to the image.

For example, the scenario detecting unit is specifically configured to: perform scenario detection on the image to determine a candidate scenario corresponding to the image; when there are a plurality of candidate scenarios, obtain a priority corresponding to each of the candidate scenarios; and determine, based on the priority corresponding to each of the candidate scenarios, the captioning scenario corresponding to the image, where the captioning scenario corresponding to the image is one of the candidate scenarios.

In another possible implementation, the first prompt determining module may further include:
a second determining unit, configured to determine, based on a prompt generation model, the first prompt corresponding to the image.

It may be understood that the captioning scenario corresponding to the image is one of an ordinary image scenario, a text image scenario, a key object scenario, and a card/license image scenario.

In a possible implementation, the apparatus may further include:
an accuracy determining module, configured to determine accuracy corresponding to the first captioning text;
a second prompt determining module, configured to determine, when the accuracy is less than preset accuracy, a second prompt corresponding to the image, where the second prompt is different from the first prompt; and
a second captioning text generation module, configured to generate, based on the second prompt, second captioning text corresponding to the image.

For example, the accuracy determining module is specifically configured to determine the accuracy corresponding to the first captioning text when the captioning scenario corresponding to the image is not the ordinary image scenario.

For example, the second prompt is a prompt corresponding to the ordinary image scenario.

In another possible implementation, the apparatus may further include:
a query information obtaining module, configured to obtain query information input by a user; and
an answer content determining module, configured to: based on the image, determine answer content corresponding to the query information, and output the answer content to the user.

In a possible implementation, the first captioning text generation module is specifically configured to input the first prompt and the image to an image captioning model for processing, to obtain first captioning text that corresponds to the image and that is output by the image captioning model, where
the image captioning model includes an image feature extraction module and a text output module, the text output module uses a deep bidirectional encoding bert model including a cross-attention layer, the image feature extraction module is configured to: obtain an image feature corresponding to the image, and input, to the text output module, the image feature used as a sequence of the cross-attention layer, and the text output module determines, based on the sequence of the cross-attention layer and a text feature corresponding to the first prompt, the first captioning text corresponding to the image.

For example, the image captioning model is obtained through pre-training and fine-tuning of an image captioning task; and
during fine-tuning of the image captioning model, the image captioning model is trained by using training images in different captioning scenarios and training captioning text corresponding to each of the training images, and the training captioning text corresponding to each of the training images includes a prompt corresponding to each of the training images.

According to a third aspect, an embodiment of this application provides an electronic device, including a memory, a processor, and a computer program that is stored in the memory and may be run on the processor. When the processor executes the computer program, the electronic device is enabled to perform the image captioning method according to any one of the implementations of the first aspect.

According to a fourth aspect, an embodiment of this application provides a computer-readable storage medium. The computer-readable storage medium stores a computer program, and when the computer program is executed by a computer, the computer is enabled to perform the image captioning method according to any one of the implementations of the first aspect.

According to a fifth aspect, an embodiment of this application provides a computer program product. When the computer program product is run on an electronic device, the electronic device is enabled to perform the image captioning method according to any one of the implementations of the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1(a) to FIG. 1(c) are diagrams of an application scenario of image captioning;
FIG. 2 is a diagram of a structure of an electronic device to which an image captioning method is applicable according to an embodiment of this application;
FIG. 3 is a diagram of a software architecture to which an image captioning method is applicable according to an embodiment of this application;
FIG. 4 is a diagram of a structure of an image captioning model according to an embodiment of this application;
FIG. 5 is a diagram of an example in which a text output module performs prediction according to an embodiment of this application; and
FIG. 6 is a schematic flowchart of an image captioning method according to an embodiment of this application.

### DESCRIPTION OF EMBODIMENTS

It should be understood that the term "include"/"comprise" when used in the specification and the appended claims of this application indicates presence of the described features, wholes, steps, operations, elements, and/or components, but does not exclude presence or addition of one or more other features, wholes, steps, operations, elements, components, and/or sets thereof.

It should be further understood that the term "and/or" used in the specification and the appended claims of this application indicates and includes any combination or all possible combinations of one or more associated items.

In addition, in the descriptions of the specification and the appended claims of this application, the terms "first", "second", "third", and the like are merely used to distinguish between descriptions, but cannot be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, statements such as "in an embodiment", "in some embodiments", "in other embodiments", and "in some other embodiments" that appear at different places in this specification do not necessarily mean reference to a same embodiment. Instead, the statements mean "one or more but not all of the embodiments", unless otherwise specifically emphasized in another manner. The terms "include", "comprise", "have", and variants thereof all mean "including but not limited to", unless otherwise specifically emphasized in another manner.

In addition, "a plurality of" mentioned in embodiments of this application should be explained as two or more.

Steps in the image captioning method provided in embodiments of this application are merely examples. Not all steps are mandatory steps, or not all content in each piece of information or a message is mandatory. In a use process, the step or the content may be added or removed based on a requirement. In different embodiments, mutual reference is made to a same step or steps or messages having a same function in embodiments of this application.

The service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Image captioning refers to generating caption information related to a given image, and is a complex task in computer vision and natural language processing. The image captioning may be applied to a scenario of guiding a blind person, to help a blind user understand screen content of an electronic device or understand an ambient environment or the like through the electronic device. The image captioning may also be applied to an information retrieval scenario and the like.

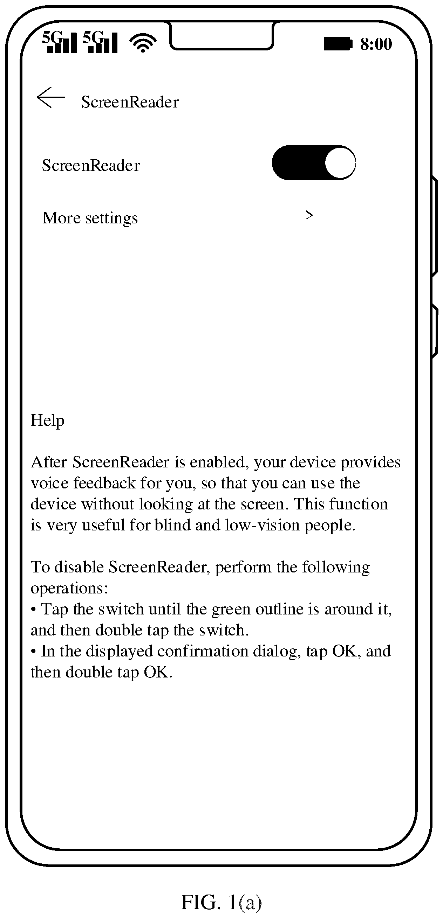

FIG. 1(a) to FIG. 1(c) are diagrams of an application scenario of image captioning. As shown in FIG. 1(a), when a user needs to use an image captioning function, the user may enable, on a setting interface that corresponds to a ScreenReader function and that is on an electronic device, a button corresponding to ScreenReader, to enter ScreenReader mode. In the ScreenReader mode, the electronic device may generate caption information related to a picture in the screen, and broadcast the caption information by using a voice, to help the user understand content displayed on the electronic device, to help the user learn about information about an ambient environment by using the electronic device, or the like.

It should be understood that, as shown in FIG. 1(a), the setting interface corresponding to the ScreenReader function may further include some prompt information, for example, may include "Help. After ScreenReader is enabled, your device provides voice feedback for you, so that you can use the device without looking at the screen. This function is very useful for blind and low-vision people. To disable ScreenReader, perform the following operations: Tap the switch until the green outline is around it, and then double tap the switch. In the displayed confirmation dialog, tap OK, and then double tap OK".

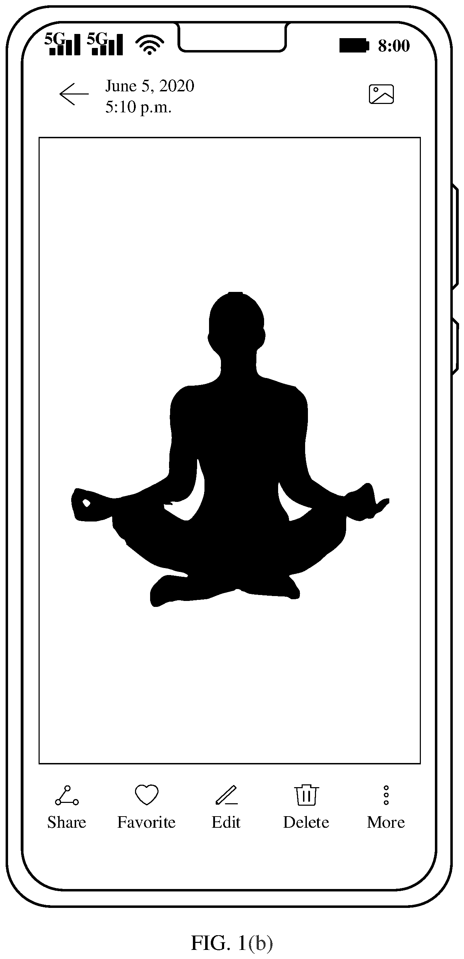

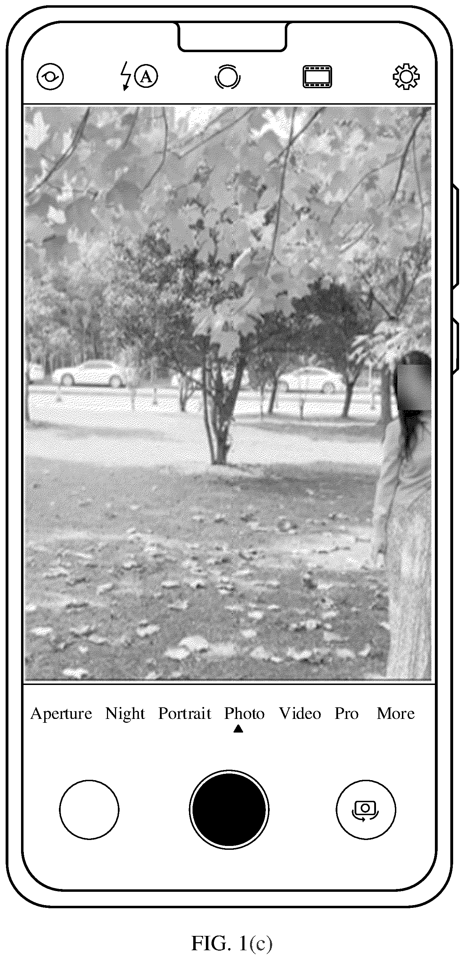

As shown in FIG. 1(b), when the electronic device displays an image A in an album, the electronic device may generate caption information corresponding to the image A, for example, "a person is sitting and practicing yoga", and broadcast the caption information by using the voice, to help the user understand the content displayed on the electronic device. As shown in FIG. 1(c), when a camera in the electronic device is started, the electronic device may display a preview image B. In this case, the electronic device may generate caption information corresponding to the preview image B, for example, "a person stands on the grass in front of a big tree, and the person is close to a right side edge", and broadcast the caption information by using the voice, to help the user learn about the information about the ambient environment by using the electronic device.

During image captioning, the electronic device may extract an image feature by using an image feature extractor, and may generate, based on the extracted image feature, caption information related to an image. The image feature extractor may be obtained through multi-modal (for example, an image and text) pre-training and then through fine-tuning of a downstream captioning task. For example, the image feature extractor may be trained through contrastive language-image pre-training (contrastive language-image pre-training, CLIP). Then, fine-tuning of the downstream captioning task may be performed on the image feature extractor based on the CLIP and generative pre-training (generative pre-training, GPT2).

The downstream captioning task may be a captioning task of a pure image (namely, an image that does not include text) (referred to as an image captioning task below), or may be a captioning task of an image with text (referred to as a text image captioning task below). When the pure image is used as a training sample to perform fine-tuning on the image feature extractor, an obtained image feature extractor may be configured to generate caption information related to the pure image. In other words, for the image with the text, the electronic device merely generates the caption information related to the image, and related content of the text is not included, or merely prompts, in the caption information, that there is the text in the image, but does not specifically describe the related content of the text. In other words, the image feature extractor obtained through fine-tuning performed based on the image captioning task cannot perform accurate image captioning for the image with the text. As a result, accuracy of the image captioning is reduced, and user experience is reduced.

When the image with the text is used as the training sample to perform fine-tuning on the image feature extractor, an obtained image feature extractor may be configured to generate caption information related to a text image. In other words, the generated caption information not only includes description related to the image, but also includes description related to the text in the image. In other words, when the image feature extractor obtained based on the text image captioning task performs image captioning on the pure image, generated caption information may include wrong text content. As a result, the accuracy of the image captioning is reduced, and user experience is reduced.

Therefore, how to perform accurate image captioning for images in different scenarios is an urgent problem to be currently resolved.

To resolve the foregoing problems, embodiments of this application provide an image captioning method, an electronic device, and a computer-readable storage medium. In the method, during image captioning, the electronic device may obtain a to-be-captioned image, and determine a first prompt corresponding to the image, to generate, based on the first prompt, first captioning text corresponding to the image. The first prompt indicates a captioning scenario corresponding to the image. In other words, in embodiments of this application, the electronic device may determine the first prompt corresponding to the image, that is, determine the captioning scenario corresponding to the image, so that the first captioning text corresponding to the image can be accurately generated based on the first prompt. In this way, captioning text with high accuracy can be generated for all images in different scenarios. As a result, accuracy of image captioning is improved, user experience is improved, and the electronic device has strong usability and practicality.

The electronic device in embodiments of this application may be a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), a desktop computer, a cloud server, or the like. A specific type of the electronic device is not limited in embodiments of this application.

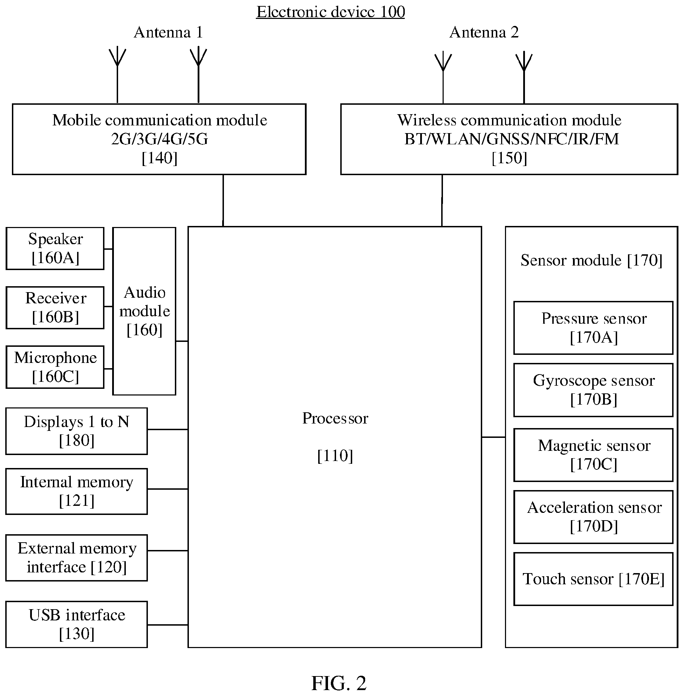

The following first describes an electronic device in embodiments of this application. FIG. 2 is a diagram of a structure of an electronic device 100.

The electronic device 100 may include a processor 110, an external memory interface 120, an internal memory 121, a universal serial bus (universal serial bus, USB) interface 130, an antenna 1, an antenna 2, a mobile communication module 140, a wireless communication module 150, an audio module 160, a speaker 160A, a receiver 160B, a microphone 160C, a sensor module 170, a display 180, and the like. The sensor module 170 may include a pressure sensor 170A, a gyroscope sensor 170B, a magnetic sensor 170C, an acceleration sensor 170D, a touch sensor 170E, and the like.

It may be understood that a structure shown in embodiments of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor 110 may directly invoke the instructions or the data from the memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be coupled to the touch sensor 170E through different I2C bus interfaces. For example, the processor 110 may be coupled to the touch sensor 170E through the I2C interface, so that the processor 110 communicates with the touch sensor 170E through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 160 through the I2S bus, to implement communication between the processor 110 and the audio module 160. In some embodiments, the audio module 160 may transmit an audio signal to the wireless communication module 150 through the I2S interface, to implement a function of answering a call through a Bluetooth headset.

The PCM interface may also be configured to: perform audio communication, and sample, quantize, and encode an analog signal. In some embodiments, the audio module 160 may be coupled to the wireless communication module 150 through a PCM bus interface. In some embodiments, the audio module 160 may alternatively transmit an audio signal to the wireless communication module 150 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a bidirectional communication bus. The bus converts to-be-transmitted data between serial communication and parallel communication. In some embodiments, the UART interface is usually configured to connect the processor 110 to the wireless communication module 150. For example, the processor 110 communicates with a Bluetooth module in the wireless communication module 150 through the UART interface, to implement a Bluetooth function. In some embodiments, the audio module 160 may transmit an audio signal to the wireless communication module 150 through the UART interface, to implement a function of playing music through a Bluetooth headset.

The MIPI interface may be configured to connect the processor 110 to a peripheral component such as the display 180. The MIPI interface includes a display serial interface (display serial interface, DSI) and the like. In some embodiments, the processor 110 communicates with the display 180 through the DSI interface, to implement a display function of the electronic device 100.

The GPIO interface may be configured by software. The GPIO interface may be configured as a control signal, or may be configured as a data signal. In some embodiments, the GPIO interface may be configured to connect the processor 110 to the display 180, the wireless communication module 150, the audio module 160, the sensor module 170, and the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to perform data transmission between the electronic device 100 and a peripheral device, or may be configured to connect a headset for playing audio through the headset. The interface may be further configured to connect to another electronic device such as an AR device.

It can be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 140, the wireless communication module 150, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be reused to improve antenna utilization. For example, the antenna 1 may be reused as a diversity antenna in a wireless local area network. In some other embodiments, the antenna may be used in combination with a tuning switch.

The mobile communication module 140 may provide a wireless communication solution that is applied to the electronic device 100 and that includes 2G/3G/4G/5G and the like. The mobile communication module 140 may include at least one filter, a switch, a power amplifier, a low noise amplifier (low noise amplifier, LNA), and the like. The mobile communication module 140 may receive an electromagnetic wave through the antenna 1, perform processing such as filtering or amplification on the received electromagnetic wave, and transmit the electromagnetic wave to the modem processor for demodulation. The mobile communication module 140 may further amplify a signal modulated by the modem processor, and convert the signal into an electromagnetic wave for radiation through the antenna 1. In some embodiments, at least some functional modules of the mobile communication module 140 may be disposed in the processor 110. In some embodiments, at least some functional modules of the mobile communication module 140 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 160A, the receiver 160B, or the like), or displays an image or a video through the display 180. In some embodiments, the modem processor may be an independent component. In some other embodiments, the modem processor may be independent of the processor 110, and is disposed in a same device as the mobile communication module 140 or another functional module.

The wireless communication module 150 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 150 may be one or more components integrating at least one communication processing module. The wireless communication module 150 receives the electromagnetic wave through the antenna 2, performs frequency modulation and filtering processing on the electromagnetic wave signal, and sends a processed signal to the processor 110. The wireless communication module 150 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 140 are coupled, and the antenna 2 and the wireless communication module 150 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 180, the application processor, and the like. The GPU is a microprocessor for image processing, and is connected to the display 180 and the application processor. The GPU is configured to: perform mathematical and geometric computation, and render an image. The processor 110 may include one or more GPUs that execute program instructions to generate or change display information.

The display 180 is configured to display an image, a video, and the like. The display 180 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 180, where N is a positive integer greater than 1.

The NPU is a neural-network (neural-network, NN) computing processor, quickly processes input information by referring to a structure of a biological neural network, for example, by referring to a mode of transmission between human brain neurons, and may further perform continuous self-learning. Applications such as intelligent cognition of the electronic device 100, for example, image recognition, facial recognition, speech recognition, and text understanding, may be implemented by using the NPU.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code, where the executable program code includes instructions. The internal memory 121 may include a program storage area and a data storage area. The program storage area may store an operating system, an application required by at least one function (for example, a sound play function and an image play function), and the like. The data storage area may store data (for example, audio data and an address book) and the like created when the electronic device 100 is used. In addition, the internal memory 121 may include a high-speed random access memory, and may further include a non-volatile memory, for example, at least one magnetic disk storage component, a flash storage component, and a universal flash storage (universal flash storage, UFS). The processor 110 runs instructions stored in the internal memory 121 and/or instructions stored in the memory disposed in the processor, to execute various function applications and data processing of the electronic device 100.

The electronic device 100 may implement an audio function, for example, music playing and recording, by using the audio module 160, the speaker 160A, the receiver 160B, the microphone 160C, the application processor, and the like.

The audio module 160 is configured to convert digital audio information into an analog audio signal for output, and is also configured to convert an analog audio input to a digital audio signal. The audio module 160 may be further configured to: encode and decode an audio signal. In some embodiments, the audio module 160 may be disposed in the processor 110, or some functional modules of the audio module 160 are disposed in the processor 110.

The speaker 160A, also referred to as a "loudspeaker", is configured to convert an audio electrical signal into a sound signal. The electronic device 100 may listen to music or answer a hands-free call by using the speaker 160A.

The receiver 160B, also referred to as an "earpiece", is configured to convert an audio electrical signal into a sound signal. When a call is answered or speech information is received by the electronic device 100, the receiver 160B may be put close to a human ear to listen to a voice.

The microphone 160C, also referred to as a "mike" or a "mic", is configured to convert a sound signal into an electrical signal. When making a call or sending speech information, a user may make a sound by a mouth close to the microphone 160C, to input the sound signal to the microphone 160C. At least one microphone 160C may be disposed in the electronic device 100. In some other embodiments, two microphones 160C may be disposed in the electronic device 100, to collect a sound signal and implement a noise reduction function. In some other embodiments, three, four, or more microphones 160C may alternatively be disposed in the electronic device 100, to collect a sound signal, implement noise reduction, identify a sound source, implement a directional recording function, and the like.

The pressure sensor 170A is configured to sense a pressure signal, and may convert the pressure signal into an electrical signal. In some embodiments, the pressure sensor 170A may be disposed on the display 180. There are a plurality of types of pressure sensors 170A, for example, a resistive pressure sensor, an inductive pressure sensor, and a capacitive pressure sensor. The capacitive pressure sensor may include at least two parallel plates made of conductive materials. When a force is applied to the pressure sensor 170A, capacitance between electrodes changes. The electronic device 100 determines pressure intensity based on a capacitance change. When a touch operation is performed on the display 180, the electronic device 100 detects intensity of the touch operation by using the pressure sensor 170A. The electronic device 100 may also calculate a touch location based on a detection signal of the pressure sensor 170A. In some embodiments, touch operations that are performed at a same touch location but have different touch operation intensity may correspond to different operation instructions. For example, when a touch operation whose touch operation intensity is less than a first pressure threshold is performed on an application icon "Messages", an instruction for viewing an SMS message is executed. When a touch operation whose touch operation intensity is greater than or equal to the first pressure threshold is performed on the application icon "Messages", an instruction for creating an SMS message is executed.

The gyroscope sensor 170B may be configured to determine a motion posture of the electronic device 100. In some embodiments, an angular velocity of the electronic device 100 around three axes (namely, x, y, and z axes) may be determined by using the gyroscope sensor 170B. The gyroscope sensor 170B may be configured to implement image stabilization during photographing. For example, when a shutter is pressed, the gyroscope sensor 170B detects an angle at which the electronic device 100 shakes, calculates, based on the angle, a distance for which a lens module needs to compensate, and allows a lens to cancel the shaking of the electronic device 100 through reverse motion, to implement the image stabilization. The gyroscope sensor 170B may further be used in a navigation scenario and a somatic game scenario.

The magnetic sensor 170C includes a Hall sensor. The electronic device 100 may detect opening and closing of a flip leather case by using the magnetic sensor 170C.

The acceleration sensor 170D may detect magnitudes of accelerations of the electronic device 100 in various directions (usually on three axes). When the electronic device 100 is in a static state, a magnitude and a direction of gravity may be detected. The acceleration sensor 170D may be further configured to identify a posture of the electronic device, and is used for applications such as landscape/portrait mode switching and a pedometer.

The touch sensor 170E is also referred to as a "touch control component". The touch sensor 170E may be disposed on the display 180, and the touch sensor 170E and the display 180 constitute a touchscreen, which is also referred to as a "touch screen". The touch sensor 170E is configured to detect a touch operation performed on or near the touch sensor 170E. The touch sensor may transfer the detected touch operation to the application processor to determine a type of a touch event. A visual output related to the touch operation may be provided through the display 180. In some other embodiments, the touch sensor 170E may be alternatively disposed on a surface of the electronic device 100 at a location different from that of the display 180.

A software system of the electronic device 100 may use a layered architecture, an event-driven architecture, a microkernel architecture, a microservice architecture, or a cloud architecture. In this embodiment of this application, an Android system of a layered architecture is used as an example to describe a software structure of the electronic device 100.

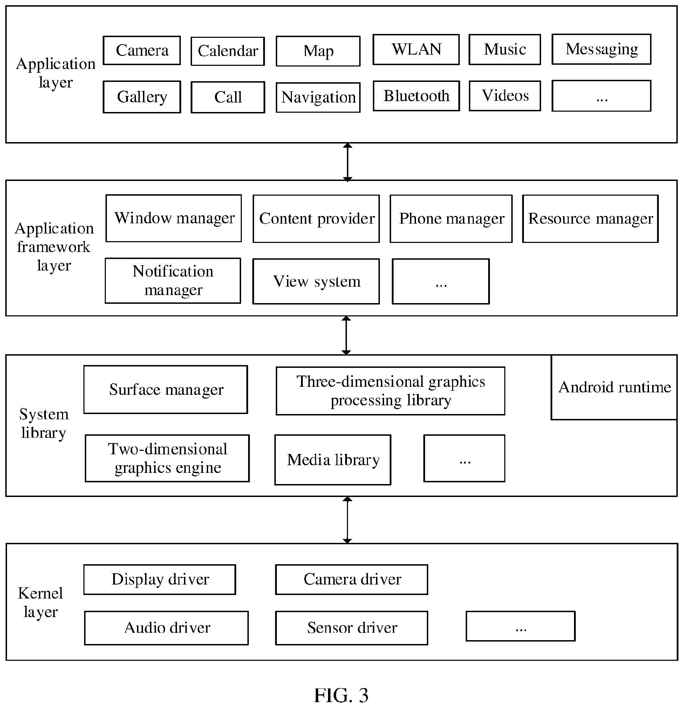

FIG. 3 is a block diagram of the software structure of the electronic device 100 according to an embodiment of this application.

In the layered architecture, software is divided into several layers, and each layer has a clear role and task. The layers communicate with each other through a software interface. In some embodiments, the Android system is divided into four layers: an application layer, an application framework layer, Android runtime (Android runtime) and a system library, and a kernel layer from top to bottom.

The application layer may include a series of application packages.

As shown in FIG. 3, the application packages may include applications such as Camera, Gallery, Calendar, Call, Map, Navigation, WLAN, Bluetooth, Music, Videos, and Messaging.

The application framework layer provides an application programming interface (application programming interface, API) and a programming framework for the applications at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by the application. The data may include a video, an image, audio, calls that are made and answered, a browsing history, a bookmark, an address book, and the like.

The view system includes visual controls such as a control for displaying text, a control for displaying an image, and the like. The view system may be configured to construct an application. A display interface may include one or more views. For example, a display interface including a short message service message notification icon may include a view for displaying text and a view for displaying an image.

The phone manager is configured to provide a communication function of the electronic device 100, for example, management of call states (including answering, declining, and the like).

The resource manager provides various resources such as a localized character string, an icon, an image, a layout file, and a video file for the application.

The notification manager enables the application to display notification information in the status bar, and may be configured to convey a notification message. The notification manager may automatically disappear after a short stay without user interaction. For example, the notification manager is configured to notify download completion, provide a message notification, and the like. The notification manager may alternatively be a notification that appears in a top status bar of a system in a form of graph or scroll bar text, for example, a notification of an application that is run on a background, or may be a notification that appears on a screen in a form of dialog window. For example, text information is prompted in the status bar, a prompt tone is made, the electronic device vibrates, or an indicator light flashes.

The Android runtime includes a kernel library and a virtual machine. The Android runtime is responsible for scheduling and management of an Android system.

The kernel library includes two parts: One part is a function that needs to be invoked by Java language, and the other part is a kernel library of Android.

The application layer and the application framework layer are run in the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of common audio and video formats, a static image file, and the like. The media library may support a plurality of audio and video encoding formats such as MPEG4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and the software. The kernel layer includes at least a display driver, a camera driver, an audio driver, and a sensor driver.

The following describes in detail the image captioning method provided in embodiments of this application with reference to the accompanying drawings and specific application scenarios.

In this embodiment of this application, during image captioning, an electronic device may obtain a to-be-captioned image, and determine a prompt (referred to as a first prompt below) corresponding to the image, to generate, based on the first prompt, captioning text (referred to as first captioning text below) corresponding to the image. The first prompt indicates a captioning scenario corresponding to the image. In other words, in this embodiment of this application, the electronic device may determine the first prompt corresponding to the image, that is, determine the captioning scenario corresponding to the image, so that the first captioning text corresponding to the image can be accurately generated based on the first prompt. In this way, captioning text with high accuracy can be generated for all images in different scenarios. As a result, accuracy of image captioning is improved, and user experience is improved.

Optionally, the captioning scenario may include a text image scenario, a key object scenario, a card/license image scenario, an ordinary image scenario, and the like. The text image scenario is a scenario in which the to-be-captioned image includes text. The key object scenario is a scenario in which the to-be-captioned image includes a key object. The card/license image scenario is a scenario in which the to-be-captioned image includes various cards such as a bank card or a member card or various licenses such as an identity card or a driving license. The ordinary image scenario is a scenario in which the to-be-captioned image is a pure image (namely, an image that does not include the text, the key object, or the card and the license).

Optionally, the key object may be any object to which a user pays attention, for example, may be any object such as a bus stop sign, a table, and a chair, or may be any obstacle on a way the user is traveling. Herein, the key object may be specifically determined based on an actual scenario. This is not limited in embodiments of this application. For example, the user may customize the key object based on a requirement of the user. Alternatively, the electronic device may set the key object by default based on an actual scenario.

It may be understood that a prompt corresponding to the text image scenario may be "the image includes the text", a prompt corresponding to the key object scenario may be "the image includes the key object", a prompt corresponding to the card/license image scenario may be "the image includes the card", a prompt corresponding to the ordinary image scenario may be "the ordinary image includes", and the like.

The prompt may be in a form of text, for example, "the image includes the key object" or "the image includes the card". Alternatively, the prompt may be a feature vector of a prompt learned by using an image. An example in which the prompt is in the form of text is used below for description.

It should be noted that the foregoing captioning scenario may include the text image scenario, the key object scenario, the card/license image scenario, and the ordinary image scenario. The prompt corresponding to each captioning scenario is merely an example for explanation, and should not be understood as a limitation on embodiments of this application. In embodiments of this application, a skilled person may determine, based on an actual scenario, the captioning scenario and the prompt corresponding to each captioning scenario.

The following use an example for description in which the captioning scenario includes the text image scenario, the key object scenario, the card/license image scenario, and the ordinary image scenario.

In a possible implementation, a preset correspondence between the captioning scenario and the prompt may be preset. The preset correspondence between the captioning scenario and the prompt may be set in the electronic device, or may be set in a third-party device that is communicatively connected to the electronic device, for example, may be set in a cloud server. Therefore, during image captioning, the electronic device may perform scenario analysis on the image and determine the captioning scenario corresponding to the image, to determine, based on the captioning scenario corresponding to the image and the preset correspondence, the first prompt corresponding to the image.

For example, in the electronic device, the prompt corresponding to the text image scenario may be set to "the image includes the text", the prompt corresponding to the key object scenario is set to "the image includes the key object", the prompt corresponding to the card/license image scenario is set to "the image includes the card", the prompt corresponding to the ordinary image scenario is set to "the ordinary image includes", and the like. Therefore, when the electronic device performs scenario analysis on the image and determines that the captioning scenario corresponding to the image is the ordinary image scenario, the electronic device may determine that the first prompt corresponding to the image is "an ordinary image includes". When the electronic device performs scenario analysis on the image and determines that the captioning scenario corresponding to the image is the text image scenario, the electronic device may determine that the first prompt corresponding to the image is "the image includes the text". When the electronic device performs scenario analysis on the image and determines that the captioning scenario corresponding to the image is the key object scenario, the electronic device may determine that the first prompt corresponding to the image is "the image includes the key object", and the like.

It should be understood that a specific manner of performing scenario analysis on the image is not limited in embodiments of this application, and may be specifically determined by a skilled person based on an actual scenario.

For example, the electronic device may determine, through text detection, whether the image includes text, to determine whether the captioning scenario corresponding to the image is the text image scenario. For example, when the image includes the text, the electronic device may determine that the captioning scenario corresponding to the image is the text image scenario. For example, when the image includes the text, and a proportion of the text in the image is greater than or equal to a preset threshold A, the electronic device may determine that the captioning scenario corresponding to the image is the text image scenario.

For example, the electronic device may determine, through target detection, whether the image includes a key object, to determine whether the captioning scenario corresponding to the image is the key object scenario. For example, when the image includes the key object, the electronic device may determine that the captioning scenario corresponding to the image is the key object scenario. For example, when the image includes the key object, and a proportion of the key object in the image is greater than or equal to a preset threshold B, the electronic device may determine that the captioning scenario corresponding to the image is the key object scenario.

Similarly, the electronic device may determine, through target detection, whether the image includes a card or a license, to determine whether the captioning scenario corresponding to the image is the card/license image scenario. For example, when the image includes the identity card or the member card, the electronic device may determine that the captioning scenario corresponding to the image is the card/license image scenario. For example, when the image includes the identity card or the member card, and a proportion of the identity card or the member card in the image is greater than or equal to a preset threshold C, the electronic device may determine that the captioning scenario corresponding to the image is the card/license image scenario.

It should be noted that the preset threshold A, the preset threshold B, and the preset threshold C may be specifically determined based on an actual scenario. This is not limited in embodiments of this application. In addition, a text detection manner and a target detection manner are not limited in embodiments of this application, and may be specifically determined by a skilled person based on an actual scenario.

It may be understood that the ordinary image scenario is a scenario other than the text image scenario, the key object scenario, and the card/license image scenario. In other words, when the captioning scenario corresponding to the image is not any one of the text image scenario, the key object scenario, and the card/license image scenario, the electronic device may determine that the captioning scenario corresponding to the image is the ordinary image scenario.

For example, when the image includes the text, but the proportion of the text in the image is less than the preset threshold A, the electronic device may determine that the captioning scenario corresponding to the image is the ordinary image scenario.

For example, when the image includes the key object, but the proportion of the key object in the image is less than the preset threshold B, the electronic device may determine that the captioning scenario corresponding to the image is the ordinary image scenario.

For example, when the image includes the key object and the text, but the proportion of the text in the image is less than the preset threshold A, and the proportion of the key object in the image is less than the preset threshold B, the electronic device may determine that the captioning scenario corresponding to the image is the ordinary image scenario.

For example, when the image includes the key object and the member card, but the proportion of the key object in the image is less than the preset threshold B, and the proportion of the member card in the image is less than the preset threshold C, the electronic device may determine that the captioning scenario corresponding to the image is the ordinary image scenario.

In an example, a priority corresponding to each captioning scenario may be set in the electronic device. When there may be two or more captioning scenarios corresponding to the image, the electronic device may determine, based on the priority corresponding to each captioning scenario, a captioning scenario currently corresponding to the image. The priority corresponding to each captioning scenario may be set by the electronic device by default, or may be customized by the user.

For example, the electronic device may set, by default, a priority corresponding to the card/license image scenario to be higher than a priority corresponding to the text image scenario, and the priority corresponding to the text image scenario to be higher than a priority corresponding to the key object scenario.

For example, when the image includes both the text and the key object, the proportion of the text in the image is greater than or equal to the preset threshold A, and the proportion of the key object in the image is also greater than or equal to the preset threshold B, that is, when the captioning scenario corresponding to the image may be the text image scenario or may be the key object scenario, because the priority corresponding to the text image scenario is higher than the priority corresponding to the key object scenario, the electronic device may determine that the captioning scenario currently corresponding to the image is the text image scenario.

For example, when the image includes the text, the key object, and the card or the license, the proportion of the text in the image is greater than or equal to the preset threshold A, the proportion of the key object in the image is also greater than or equal to the preset threshold B, and the proportion of the card or the license in the image is greater than or equal to the preset threshold C, because a priority corresponding to the card/license image scenario is higher than the priority corresponding to the text image scenario, and the priority corresponding to the text image scenario is higher than the priority corresponding to the key object scenario, the electronic device may determine that the captioning scenario currently corresponding to the image is the card/license image scenario.

It should be noted that, that the electronic device sets, by default, the priority corresponding to the card/license image scenario to be higher than the priority corresponding to the text image scenario, and the priority corresponding to the text image scenario to be higher than the priority corresponding to the key object scenario is merely an example for explanation, and should not be understood as a limitation on embodiments of this application.

For example, the electronic device may determine, based on the proportion A of the text in the image, the proportion B of the key object in the image, and the proportion C of the card or the license in the image, the priority corresponding to each captioning scenario. Optionally, a larger proportion indicates that the electronic device may determine a higher priority of the captioning scenario corresponding to the proportion. A smaller proportion indicates that the electronic device may determine a lower priority of the captioning scenario corresponding to the proportion.

For example, when the image includes both the text and the key object, and the proportion A of the text in the image is greater than or equal to the proportion B of the key object in the image, the electronic device may set, by default, the priority corresponding to the text image scenario to be higher than the priority corresponding to the key object scenario. Therefore, the electronic device may determine that the captioning scenario currently corresponding to the image is the text image scenario.

For example, when the image includes the text, the key object, and the identity card, the proportion B of the key object in the image is greater than or equal to a proportion C of the identity card in the image, and the proportion C of the identity card in the image is greater than or equal to the proportion A of the text in the image, the electronic device may set, by default, the priority corresponding to the key object scenario to be higher than the priority corresponding to the card/license image scenario, and the priority corresponding to the card/license image scenario is higher than the priority corresponding to the text image scenario. Therefore, the electronic device may determine that the captioning scenario currently corresponding to the image is the key object scenario.

For example, the user may customize, based on content in which the user is interested, the priority corresponding to each captioning scenario, so that the electronic device can accurately describe, during image captioning, content in which the user is more interested. Therefore, user experience is improved. For example, when the user is more interested in the text than the key object, and is more interested in the key object than the card or the license, the user may customize the priority corresponding to the text image scenario to be higher than the priority corresponding to the key object scenario, and the priority corresponding to the key object scenario to be higher than the priority corresponding to the card/license image scenario. Therefore, when the image includes both the text and the key object, the electronic device may determine that the captioning scenario currently corresponding to the image is the text image scenario. When the image includes both the key object and the identity card, the electronic device may determine that the captioning scenario currently corresponding to the image is the key object scenario.

In another possible implementation, the electronic device may directly determine, by using a prompt generation model, the first prompt corresponding to the image. To be specific, the electronic device may input the image to the prompt generation model for processing, to obtain a prompt output by the prompt generation model. In this case, the electronic device may determine the prompt output by the prompt generation model as the first prompt corresponding to the image.

It should be noted that a specific structure of the prompt generation model is not limited in embodiments of this application, and may be specifically determined based on an actual scenario. The prompt generation model may be obtained through training with training samples. Each training sample may include a training image and a prompt corresponding to the training image.

In this embodiment of this application, after determining the first prompt corresponding to the image, the electronic device may generate, based on the first prompt, the first captioning text corresponding to the image.

In a possible implementation, after generating the first captioning text corresponding to the image, the electronic device may determine accuracy corresponding to the first captioning text. When the accuracy corresponding to the first captioning text is greater than or equal to preset accuracy, the electronic device may determine that the currently generated first captioning text is accurate. In other words, the electronic device may determine the currently generated first captioning text as captioning text currently corresponding to the image. It should be understood that the preset accuracy may be specifically set based on an actual situation. This is not limited in embodiments of this application.

In an example, when the accuracy corresponding to the first captioning text is less than the preset accuracy, the electronic device may determine that the currently generated first captioning text is wrong, and re-determine a prompt (referred to as a second prompt below) corresponding to the image, to regenerate captioning text (referred to as second captioning text below) based on the second prompt. The second prompt is different from the first prompt. For example, when the first prompt is the prompt corresponding to the text image scenario, the second prompt may be the prompt corresponding to the ordinary image scenario, may be the prompt corresponding to the key object scenario, or may be the prompt corresponding to the card/license image scenario.

It should be understood that, after obtaining the second captioning text, the electronic device may determine accuracy corresponding to the second captioning text, and may determine, based on the accuracy corresponding to the second captioning text, whether to determine the second captioning text as the captioning text currently corresponding to the image. In other words, when the accuracy corresponding to the second captioning text is greater than or equal to the preset accuracy, the electronic device may determine the second captioning text as the captioning text currently corresponding to the image. When the accuracy corresponding to the second captioning text is less than the preset accuracy, the electronic device may re-determine a prompt (referred to as a third prompt below) corresponding to the image, and may regenerate captioning text (referred to as third captioning text below) based on the third prompt. The third prompt is different from the first prompt and the second prompt. After obtaining the third captioning text, the electronic device may determine accuracy corresponding to the third captioning text, and may determine, based on the accuracy corresponding to the third captioning text, whether to determine the third captioning text as the captioning text currently corresponding to the image. The rest may be deduced by analogy until the electronic device obtains corresponding captioning text (referred to as N^{th} captioning text below) based on an N^{th} prompt, where N≥1.

Optionally, after obtaining the N^{th} captioning text, the electronic device may determine accuracy corresponding to the N^{th} captioning text. When the accuracy corresponding to the N^{th} captioning text is greater than or equal to the preset accuracy, the electronic device may determine the N^{th} captioning text as the captioning text currently corresponding to the image. When the accuracy corresponding to the N^{th} captioning text is less than the preset accuracy, the electronic device may directly regenerate captioning text (referred to as target captioning text below) based on the prompt corresponding to the ordinary image scenario, and may determine the target captioning text as the captioning text currently corresponding to the image, to provide a brief caption for the image. In this way, a possibility that image captioning is wrong is reduced, and user experience is improved.

It should be noted that a specific value of N may be determined by a skilled person based on an actual scenario. This is not limited in embodiments of this application. For example, the skilled person may set N to 1 based on the actual scenario. To be specific, when the accuracy corresponding to the first captioning text is less than the preset accuracy, the electronic device may directly generate, based on the prompt corresponding to the ordinary image scenario, the first captioning text corresponding to the image, that is, directly provide a brief caption for the image. In this way, a possibility that image captioning is wrong is reduced, and user experience is improved.

For example, the electronic device may obtain a text feature corresponding to captioning text (for example, the first captioning text, the second captioning text, ..., or the N^{th} captioning text), and may determine a similarity between the text feature corresponding to the captioning text and an image feature. Then, the electronic device may determine the similarity as accuracy corresponding to the captioning text. The similarity between the text feature and the image feature may be represented by a distance (for example, a cosine (cos) distance) between the text feature and the image feature or a dot product of the text feature and the image feature.

In this embodiment of this application, the electronic device may obtain, by using an image captioning model, the first captioning text corresponding to the image. To be specific, after obtaining the first prompt corresponding to the image, the electronic device may input the image and the first prompt to the image captioning model for processing, to obtain captioning text output by the image captioning model, and may determine, as the first captioning text corresponding to the image, the captioning text output by the image captioning model. Similarly, after obtaining the N^{th} prompt corresponding to the image, the electronic device may input the image and the N^{th} prompt to the image captioning model for processing, to obtain N^{th} captioning text output by the image captioning model.

The following uses the first prompt as an example to describe a specific process in which the image captioning model generates the first captioning text based on the image and the first prompt.

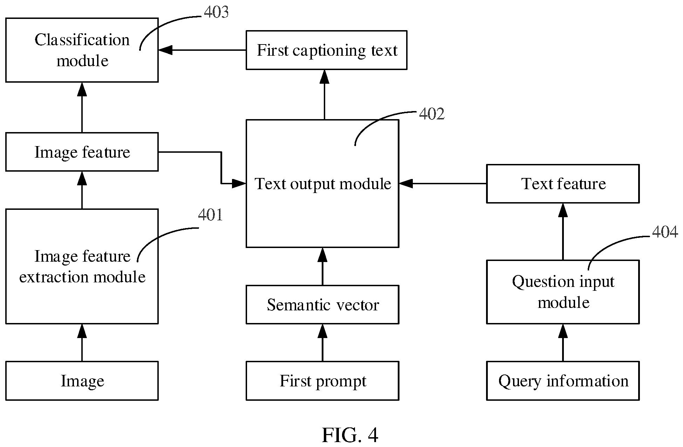

FIG. 4 is a diagram of a structure of an image captioning model according to an embodiment of this application. As shown in FIG. 4, the image captioning model may include an image feature extraction module 401 and a text output module 402. The image feature extraction module 401 may include a ResNet-50 model. The text output module 402 may include a deep bidirectional encoding (bidirectional encoder representations from transformer, bert) model, for example, may include a tiny-bert model including a cross-attention (cross-attention) layer.

As shown in FIG. 4, after obtaining the image and the first prompt, the image captioning model may perform feature extraction on the image by using the image feature extraction module 401, to obtain the image feature, and may input, to the text output module 402, the image feature used as a sequence of the cross-attention layer. For example, when a size of the image is 3 × 224 × 224, the image feature extraction module 401 performs feature extraction on the image, and may obtain an image feature whose size is 1 × 49 × 2048. In addition, the image captioning model may encode the first prompt, to obtain a semantic vector corresponding to the first prompt, and may input, to the text output module 402, the semantic vector corresponding to the first prompt.

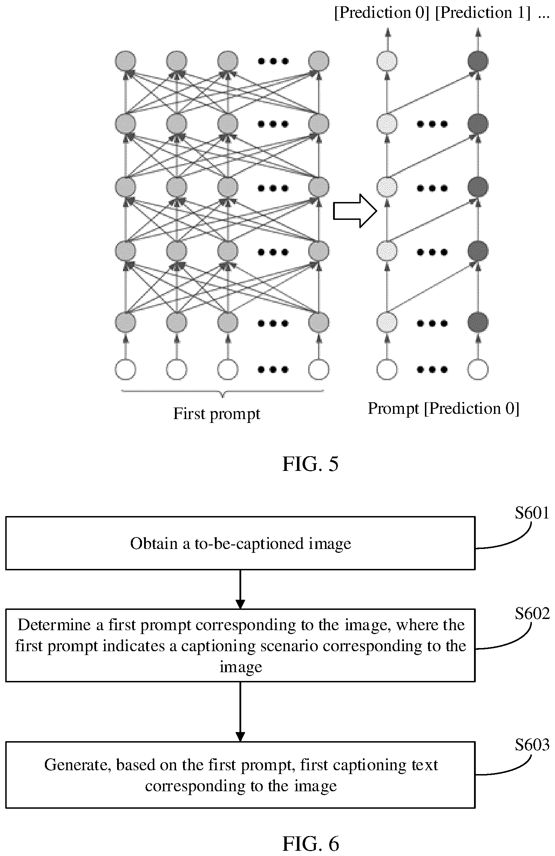

FIG. 5 is a diagram of an example in which a text output module performs prediction according to an embodiment of this application. As shown in FIG. 5, the text output module 402 may predict each token in the first captioning text in a manner of predicting a next token based on a previous token, to obtain the first captioning text.

For example, the text output module 402 may obtain, based on the semantic vector corresponding to the first prompt, a text feature W1 corresponding to the first prompt, and may perform, by using the sequence of the cross-attention layer (namely, the image feature), cross-attention (attention) processing on the text feature W1 corresponding to the first prompt, that is, may perform cross-correlation processing on the image feature and the text feature W1 corresponding to the first prompt, to obtain a 1^{st} prediction token prediction 0 predicted based on the first prompt, namely, a 1^{st} prediction token prediction 0 after the first prompt in the captioning text.

Then, the text output module 402 may perform cross-correlation processing on the 1^{st} prediction token prediction 0 and the text feature W1 corresponding to the first prompt, to obtain a fusion feature M1, and may perform cross-correlation processing on the fusion feature M1 again by using the sequence of the cross-attention layer, to obtain a 2^{nd} prediction token prediction 1. Next, the text output module 402 may perform subsequent prediction by using a conventional beam search (beam search) method until an end character is predicted or a length of the captioning text is greater than or equal to a preset length threshold, to obtain the first captioning text corresponding to the image, for example, first captioning text whose sequence length is N.

In a possible implementation, as shown in FIG. 4, the image captioning model may further include a classification module 403. The classification module 403 is configured to determine the accuracy corresponding to the first captioning text output by the text output module 402. The classification module 403 may include a fully connected layer and a tiny-bert model including no cross-attention layer.

Optionally, after obtaining the first captioning text output by the text output module 402, the image captioning model may encode the first captioning text, to obtain a semantic vector corresponding to the first captioning text, and may input, to the classification module 403, the semantic vector corresponding to the first captioning text.

The classification module 403 may obtain, based on the semantic vector corresponding to the first captioning text, a text feature W2 corresponding to the first captioning text. To be specific, the classification module 403 may process the semantic vector by using the fully connected layer and the tiny-bert model including no cross-attention layer, to obtain the text feature W2 corresponding to the first captioning text. For example, when the semantic vector corresponding to the first captioning text is 1 × N × 312, the classification module 403 may obtain, based on the semantic vector corresponding to the first captioning text, a text feature W2 whose size is N × 2048. Then, the classification module 403 may cause the text feature W2 corresponding to the first captioning text to interact with the image feature, to obtain the accuracy corresponding to the first captioning text (namely, a probability that the first captioning text is accurate in description).

Optionally, the image feature extraction module 401 may further include a pooling layer and a fully connected layer. Before the text feature W2 corresponding to the first captioning text is caused to interact with the image feature, the image feature extraction module 401 may further process the image feature through the pooling layer and the fully connected layer, to obtain a processed image feature. For example, an image feature whose size is 1 × 49 × 2048 may be processed through the pooling layer and the fully connected layer, to obtain an image feature whose size is 1 × 2048. The classification module 403 may cause the text feature W2 corresponding to the first captioning text to interact with the processed image feature, to obtain the accuracy corresponding to the first captioning text.

The text feature W2 corresponding to the first captioning text may interact with the image feature by calculating a cos distance or a dot product.

For example, when the accuracy corresponding to the first captioning text is greater than or equal to the preset accuracy, the electronic device may determine that the first captioning text currently generated by the image captioning model is accurate. Therefore, the electronic device may determine, as the captioning text currently corresponding to the image, the first captioning text currently generated by the image captioning model.

For example, when the accuracy corresponding to the first captioning text is less than the preset accuracy, the electronic device may determine that the first captioning text currently generated by the image captioning model is inaccurate. In this case, the electronic device may re-determine the second prompt corresponding to the image, and input the image and the second prompt to the image captioning model. The image captioning model may generate the second captioning text through the image feature extraction module 401 and the text output module 402. Then, the image captioning model may determine, through the classification module 403, the accuracy corresponding to the second captioning text, to determine, based on the accuracy corresponding to the second captioning text, whether to determine the second captioning text as the captioning text currently corresponding to the image. The rest may be deduced by analogy.

Alternatively, when the accuracy corresponding to the first captioning text is less than the preset accuracy, the electronic device may directly determine, as the second prompt, the prompt corresponding to the ordinary image scenario, and may input the image and the second prompt again to the image captioning model for processing, to obtain the second captioning text. Then, the electronic device may determine the second captioning text as the captioning text currently corresponding to the image.

In another possible implementation, as shown in FIG. 4, the image captioning model may further include a question input module 404. During image captioning, the electronic device may obtain query information input by the user. The query information may be text information, or may be speech information. When the query information is the speech information, the electronic device may convert the query information into text content by using an automatic speech recognition (automatic speech recognition, ASR) technology, and may input, to the question input module 404, the text content obtained through conversion (namely, text content corresponding to the query information).

After obtaining the text content corresponding to the query information, the question input module 404 may obtain a text feature W3 corresponding to the text content, and may input the text feature W3 to the text output module 402. The text output module 402 may fuse the text feature W3 with the image feature, for example, may concatenate the text feature W3 and the image feature, to obtain a concatenated feature. Then, the text output module 402 may update the sequence of the cross-attention layer in the text output module 402 with the concatenated feature. That is, the text output module 402 may determine, as a sequence of the cross-attention layer, the feature obtained by concatenating the text feature W3 and the image feature. Therefore, when determining the captioning text corresponding to the image, the text output module 402 may perform cross-correlation processing by using an updated sequence of the cross-attention layer, to obtain captioning text corresponding to the query information, namely, answer content corresponding to the query information.

In other words, after accurately generating the first captioning text corresponding to the image, the electronic device may further obtain the query information of the user, and may determine, by using the image captioning model, the answer content corresponding to the query information, that is, may provide a further caption for the image based on the query information of the user, to caption a detail to which the user pays attention. As a result, image captioning better meets an expectation and a requirement of the user, and user experience is improved.

In this embodiment of this application, the image captioning model may be obtained through pre-training and then fine-tuning on downstream tasks (namely, image captioning tasks in different scenarios). During pre-training, training data of the image captioning model is an image-text sample pair (in other words, each piece of training data may include one image and captioning text corresponding to the image). Optionally, training on three pre-training tasks may be performed during pre-training. A loss function of a first pre-training task may be a cross entropy loss (cross entropy loss) function between the image feature and the text feature. A loss function of a second pre-training task may also be the cross entropy loss between the image feature and the text feature, and may be performed in the cross-attention layer, to perform cross-correlation processing on the image feature and the text feature. Training data of the second pre-training task may be an image-text sample pair with a large loss in the first pre-training task. A third pre-training task may be training a language model (namely, the foregoing text output module 402) to predict a next token based on a previous token. A loss function of the third pre-training task may also be the cross entropy loss between the image feature and the text feature.

During fine-tuning on the downstream tasks, for different captioning scenarios, the electronic device may obtain different images and captioning text corresponding to each of the images, and obtain a prompt corresponding to each of the images. Then, for each of the images, the electronic device may add the prompt corresponding to the image to the captioning text corresponding to the image. For example, the prompt corresponding to the image may be added before the captioning text corresponding to the image, to obtain training captioning text that includes the prompt and that is of the image. For example, for an image in the ordinary image scenario, "the picture includes" may be added before captioning text corresponding to the image. For example, for an image in the text image scenario, "the picture includes text" may be added before captioning text corresponding to the image. For example, for an image in the key object scenario, "the picture includes a key object" may be added before captioning text corresponding to the image. For example, for an image in the card/license image scenario, "the picture includes a card" or the like may be added before captioning text corresponding to the image.

Next, the electronic device may perform, by using each of the images and training captioning text corresponding to each of the images, fine tuning and training on an image captioning model obtained through the foregoing pre-training, to obtain a fine-tuned image captioning model. In this way, all the captioning scenarios are included in one image captioning model, so that accurate image captioning can be performed for images in different scenarios by using the one image captioning model, and there is no need to separately train a corresponding captioning model for each scenario. As a result, user experience is improved.

In this embodiment of this application, the image captioning model obtained through training may be provided in the electronic device, or may be provided in the third-party device communicatively connected to the electronic device. For example, the image captioning model may be provided in a cloud server communicatively connected to the electronic device. Therefore, after determining the first prompt corresponding to the image, the electronic device may send the image and the first prompt to the cloud server. After obtaining the image and the first prompt, the cloud server may input the image and the first prompt to the image captioning model for processing, to obtain the first captioning text output by the image captioning model, and may send the first captioning text to the electronic device. The electronic device may determine, as the captioning text currently corresponding to the image, the first captioning text returned by the cloud server.

For example, when the image captioning model is provided in the electronic device, the image captioning model may be distilled by using a distillation technology, to miniaturize the model, reduce a performance requirement of the image captioning model for the electronic device, and help the user implement image captioning in each scenario through the electronic device.

It may be understood that, a specific manner of distilling the image captioning model may be determined by a skilled person based on an actual scenario. This is not limited in embodiments of this application. For example, when the image captioning model is provided in the electronic device, the image captioning model may not include the foregoing question input module 404, and a question and answer function may be provided in the cloud server. In other words, during image captioning, if the user inputs the query information, the electronic device may convert the query information into the text content by using the ASR technology, and may send the text content to the cloud server. The cloud server may process the text content by using the question and answer function that is of the image captioning model and that is in the cloud server, to obtain the answer content corresponding to the query information, and may send the answer content to the electronic device, so that the electronic device replies to the query of the user based on the answer content.

Based on the foregoing embodiments, the following describes, by using an example, the image captioning method provided in embodiments of this application. Content of the foregoing embodiments is applicable to this embodiment. FIG. 6 is a schematic flowchart of an image captioning method according to an embodiment of this application. The method may be applied to an electronic device. As shown in FIG. 6, the method may include the following steps.

S601: Obtain a to-be-captioned image.

It should be understood that the to-be-captioned image may be an image that is being displayed on the electronic device. The image that is being displayed on the electronic device may be an image in an album, a scene presented by an application, a preview image captured through a camera, or the like.

S602: Determine a first prompt corresponding to the image, where the first prompt indicates a captioning scenario corresponding to the image.

In an example, the electronic device may perform scenario analysis on the image, to determine the captioning scenario corresponding to the image. Then, the electronic device may determine, based on a preset correspondence between a captioning scenario and a prompt, the first prompt corresponding to the image. For content related to the preset correspondence between the captioning scenario and the prompt, refer to the foregoing detailed description of the preset correspondence between the captioning scenario and the prompt. For content related to determining the captioning scenario corresponding to the image, refer to the foregoing detailed description of determining the captioning scenario. Details are not described herein again.

In another example, the electronic device may directly determine, by using a prompt generation model, the first prompt corresponding to the image. For content related to the prompt generation model, refer to the foregoing description of the prompt generation model. Details are not described herein again.

S603: Generate, based on the first prompt, first captioning text corresponding to the image.

For example, the electronic device may generate, based on the first prompt and the image by using an image captioning model in the electronic device, the first captioning text corresponding to the image. Alternatively, the electronic device may send the first prompt and the image to a cloud server. The cloud server may generate, based on the first prompt and the image by using an image captioning model in the cloud server, the first captioning text corresponding to the image. For content related to the image captioning model, refer to the foregoing detailed descriptions of the image captioning model, FIG. 4, and FIG. 5. Details are not described herein again.

In a possible implementation, after obtaining the first captioning text, the electronic device may determine accuracy corresponding to the first captioning text. When the accuracy corresponding to the first captioning text is greater than or equal to preset accuracy, the electronic device may determine, as captioning text currently corresponding to the image, the first captioning text currently generated by the image captioning model. When the accuracy corresponding to the first captioning text is less than the preset accuracy, the electronic device may determine a second prompt corresponding to an ordinary image scenario, and may input the second prompt and the image to the image captioning model, to obtain second captioning text output by the image captioning model. In this case, the electronic device may directly determine the second captioning text as the captioning text currently corresponding to the image.

For example, the electronic device may determine, through a classification module in the image captioning model, the accuracy corresponding to the first captioning text. For content related to the classification module, refer to the foregoing detailed descriptions of the classification module 403 and FIG. 4. Details are not described herein again.

The following describes, by using an example, an application scenario to which embodiments of this application are applicable.

For example, when the electronic device displays an image (for example, an image including text content) in an album, the electronic device may provide image captioning for the image by using the foregoing image captioning method, to obtain captioning text corresponding to the image, for example, "A picture including text whose content is Tomorrow is another day, let's go!" Then, the electronic device may output, to a user through voice play and/or text display, the captioning text corresponding to the image, to help the user learn about content currently displayed on the electronic device.

For example, the electronic device captures an image of an ambient environment through a camera, and it is assumed that a bus stop is included in the ambient environment, and a bus stop sign is a key object to which the user pays attention. In other words, the captured image of the environment may include the bus stop sign. In this case, the electronic device may perform image captioning on the image of the environment by using the foregoing image captioning method, to obtain captioning text corresponding to the image of the environment, for example, "A picture including a bus stop sign, which includes Route 1 from the bus station to the train station and Route 202 from the AA station to the BB station". In this case, the electronic device may output, to the user through voice play and/or text display, the captioning text corresponding to the image of the environment, to help the user learn about the ambient environment.

In this embodiment of this application, during image captioning, the electronic device may obtain the to-be-captioned image, and determine the first prompt corresponding to the image, to generate, based on the first prompt, the first captioning text corresponding to the image. The first prompt indicates the captioning scenario corresponding to the image. In other words, in this embodiment of this application, the electronic device may determine the first prompt corresponding to the image, that is, determine the captioning scenario corresponding to the image, so that the first captioning text corresponding to the image can be accurately generated based on the first prompt. In this way, captioning text with high accuracy can be generated for all images in different scenarios. As a result, accuracy of image captioning is improved, and user experience is improved.

It should be understood that sequence numbers of the steps in the foregoing embodiments do not mean an execution order. The execution order of the processes should be determined based on functions and internal logic of the processes, and should not be construed as any limitation on the implementation processes of embodiments of this application.

Corresponding to the image captioning method in the foregoing embodiments, an embodiment of this application further provides an image captioning apparatus. Modules of the apparatus may correspondingly implement steps of the image captioning method.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

A person skilled in the art may clearly understand that, for the purpose of convenient and brief description, division into the foregoing functional units and modules is merely used as an example for description. During actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, each of the units may exist alone physically, or two or more units may be integrated into one unit. The integrated unit may be implemented in a form of hardware, or may be implemented in a form of software functional unit. In addition, specific names of the functional units and modules are merely for ease of distinguishing between the functional units and modules, but are not intended to limit the protection scope of this application. For a specific working process of the units and modules in the foregoing system, refer to a corresponding process in the method embodiments. Details are not described herein again.

An embodiment of this application further provides an electronic device. The electronic device includes at least one memory, at least one processor, and a computer program that is stored in the at least one memory and that can be run on the at least one processor. When the processor executes the computer program, the electronic device is enabled to implement steps in any one of the foregoing method embodiments. For example, a structure of the electronic device may be shown in FIG. 2.

An embodiment of this application further provides a computer-readable storage medium. The computer-readable storage medium stores a computer program. When the computer program is executed by a computer, the computer is enabled to implement the steps in any one of the foregoing method embodiments.

An embodiment of this application provides a computer program product. When the computer program product is run on an electronic device, the electronic device is enabled to implement the steps in any one of the foregoing method embodiments.

When an integrated unit is implemented in the form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be performed. The computer program includes computer program code. The computer program code may be in a source code form, an object code form, an executable file form, some intermediate forms, or the like. The computer-readable storage medium may include at least any entity or apparatus that can carry computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc. In some jurisdictions, the computer-readable storage medium cannot be the electrical carrier signal or the telecommunication signal according to legislation and patent practices.

In the foregoing embodiments, the descriptions of each embodiment have respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one place, or may be distributed on a plurality of network units. Some or all of the units may be selected according to actual requirements to achieve the objectives of the solutions of embodiments.

The foregoing embodiments are merely intended for describing the technical solutions of this application, rather than limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. An image captioning method, applied to an electronic device, wherein the method comprises:
obtaining a to-be-captioned image;
determining a first prompt corresponding to the image, wherein the first prompt indicates a captioning scenario corresponding to the image; and
generating, based on the first prompt, first captioning text corresponding to the image, wherein the first captioning text corresponds to the captioning scenario corresponding to the image.

2. The method according to claim 1, wherein the determining a first prompt corresponding to the image comprises:
performing scenario detection on the image to determine the captioning scenario corresponding to the image; and
determining, based on the captioning scenario corresponding to the image, the first prompt corresponding to the image.

3. The method according to claim 2, wherein the performing scenario detection on the image to determine the captioning scenario corresponding to the image comprises:
performing scenario detection on the image to determine a candidate scenario corresponding to the image;
when there are a plurality of candidate scenarios, obtaining a priority corresponding to each of the candidate scenarios; and
determining, based on the priority corresponding to each of the candidate scenarios, the captioning scenario corresponding to the image, wherein the captioning scenario corresponding to the image is one of the candidate scenarios.

4. The method according to claim 1, wherein the determining a first prompt corresponding to the image comprises:
determining, based on a prompt generation model, the first prompt corresponding to the image.

5. The method according to any one of claims 1 to 4, wherein the captioning scenario corresponding to the image is one of an ordinary image scenario, a text image scenario, a key object scenario, and a card/license image scenario.

6. The method according to any one of claims 1 to 5, wherein after the generating, based on the first prompt, first captioning text corresponding to the image, the method further comprises:
determining accuracy corresponding to the first captioning text;
when the accuracy is less than preset accuracy, determining a second prompt corresponding to the image, wherein the second prompt is different from the first prompt; and
generating, based on the second prompt, second captioning text corresponding to the image.

7. The method according to claim 6, wherein the determining accuracy corresponding to the first captioning text comprises:
when the captioning scenario corresponding to the image is not the ordinary image scenario, determining the accuracy corresponding to the first captioning text.

8. The method according to claim 7, wherein the second prompt is a prompt corresponding to the ordinary image scenario.

9. The method according to any one of claims 1 to 8, wherein after the generating, based on the first prompt, first captioning text corresponding to the image, the method further comprises:
obtaining query information input by a user; and
based on the image, determining answer content corresponding to the query information, and outputting the answer content to the user.

10. The method according to any one of claims 1 to 9, wherein the generating, based on the first prompt, first captioning text corresponding to the image comprises:
inputting the first prompt and the image to an image captioning model for processing, to obtain first captioning text that corresponds to the image and that is output by the image captioning model, wherein
the image captioning model comprises an image feature extraction module and a text output module, the text output module uses a deep bidirectional encoding bert model comprising a cross-attention layer, the image feature extraction module is configured to: obtain an image feature corresponding to the image, and input, to the text output module, the image feature used as a sequence of the cross-attention layer, and the text output module determines, based on the sequence of the cross-attention layer and a text feature corresponding to the first prompt, the first captioning text corresponding to the image.

11. The method according to claim 10, wherein the image captioning model is obtained through pre-training and fine-tuning of an image captioning task; and
during fine-tuning of the image captioning model, the image captioning model is trained by using training images in different captioning scenarios and training captioning text corresponding to each of the training images, and the training captioning text corresponding to each of the training images comprises a prompt corresponding to each of the training images.

12. An electronic device, comprising a memory, a processor, and a computer program that is stored in the memory and is run on the processor, wherein when the processor executes the computer program, the electronic device is enabled to perform the image captioning method according to any one of claims 1 to 11.

13. A computer-readable storage medium, wherein the computer-readable storage medium stores a computer program, and when the computer program is executed by a computer, the computer is enabled to perform the image captioning method according to any one of claims 1 to 11.
